Europäisches Patentamt

European Patent Office

Office européen des brevets

(11) Publication number: **0 135 029**
**B1**

# EUROPEAN PATENT SPECIFICATION

(45) Date of publication of the patent specification:
17.09.86

(51) Int. Cl.⁴: **B 65 G 37/02**

(21) Application number: **84108450.2**

(22) Date of filing: **18.07.84**

(54) **Docking and fixing device for a pallet in a robot or like system.**

(30) Priority: **19.08.83 SE 8304520**

(43) Date of publication of application:
**27.03.85 Bulletin 85/13**

(45) Publication of the grant of the patent:
**17.09.86 Bulletin 86/38**

(84) Designated Contracting States:
**DE FR GB SE**

(56) References cited:
**DE - A - 2 638 230**
**DE - A - 3 212 272**
**US - A - 4 394 897**

(73) Proprietor: **International Business Machines
Corporation, Old Orchard Road, Armonk, N.Y. 10504 (US)**

(72) Inventor: **Lycke, Hans, Stugvägen 9, S-16146 Bromma
(SE)**

(74) Representative: **Ekström, Gösta E., IBM Svenska AB
Box 962, S-181 09 Lidingö (SE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

ACTORUM AG

## Description

The invention relates to a docking and fixing system for a pallet in a robot or like system.

Modern assembly robots or like systems are able to operate without human interaction for relatively long time periods. Tools and/or material are to be fed into the work envelope of the robot.

According to prior known technique this has been done by supplying tools and/or material on a conveyor belt continuously running through the work envelope of the robot. Such a system requires for example exact positioning of the material on the conveyor belt and exact conveyor speed to make it possible for the robot gripper to find the detail needed. Further, as such a conveyor belt must have a limited length material must be continuously loaded onto the conveyor belt. Thus, the supply of tools and/or material demands continuous human interaction.

US-A-4394897 describes a pallet registry mechanism used in a multiple station transfer machine wherein pallets carrying work pieces are moved to various stations, located and clamped for a machine operation. A mechanism is provided for operating locating pins and clamping members located in each station. The locating pins and clamping members are actuated by internal elastic energy cartridges in each station acting through mechanisms including levers, pivots and rolling contacts. This registry mechanism is very complicated and therefore expensive.

The invention as claimed is intended to remedy the drawbacks of the prior known systems. The invention relates to a docking and fixing system for a robot or like system for docking and fixing a pallet which has been moved into an approximate work position. The invention is characterized by a linear motor fixedly mounted to a robot frame in a position transverse to the transport path of the pallet and having an elongated bar fastened transversely to its axially movable part and having a stud and docking means fixedly mounted to said bar. A socket is provided for cooperation with said stud when said stud is moved upwards by said linear motor in order to position the pallet in a lateral, exactly defined position, said socket being an integral part of a stud bolt which is adjustably mounted to an extruded section of a pallet. The invention is further characterized by a guide rail fixedly mounted to the robot frame for cooperation with said extruded section of the pallet when the pallet is moved upwards by said linear motor in order to position the pallet in a vertical, exactly defined position.

The invention, which is defined in the attached claims, is described in detail below with reference to the drawings which illustrate only one specific embodiment in which

Fig. 1 is a perspective view of a robot system with exchangeable work tables, pallets,

Fig. 2 is a perspective view of a pallet,

Fig. 3 is a schematic view of a transport system for pallets,

Fig. 4 is a perspective view showing the positions of the docking and fixing means,

Fig. 5 is a sectional view along line A-A in fig. 4,

Fig. 6 is a sectional view along line B-B in fig. 4.

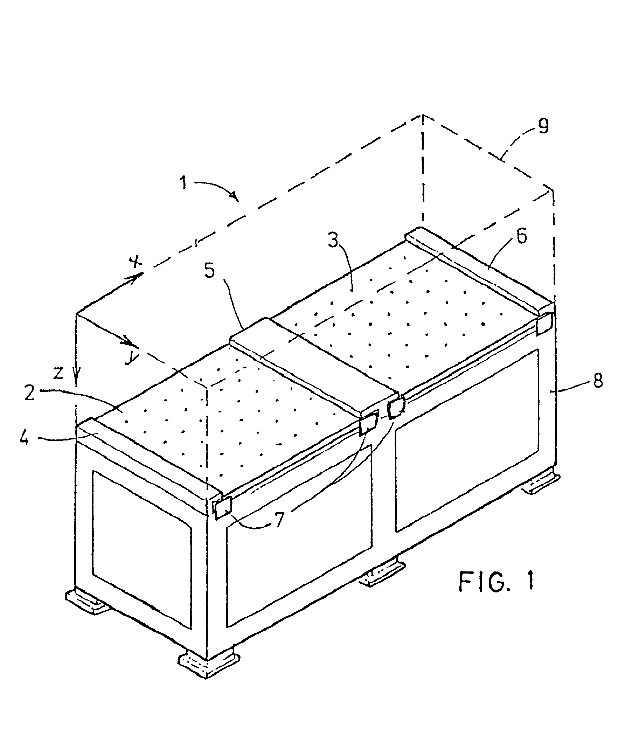

Fig. 1 shows a perspective view of a robot system 1 provided with exchangeable work tables so called pallets 2 and 3. The work table area is provided with guide rails 4, 5 and 6 and stop means 7. Thus, the pallet can be moved into an approximate work position defined by said guide rails 4 to 6 and said stop means 7. Then, the pallet is brought into an exactly defined work position and fixed (locked) in that position by the docking and fixing means according to the subject invention described below.

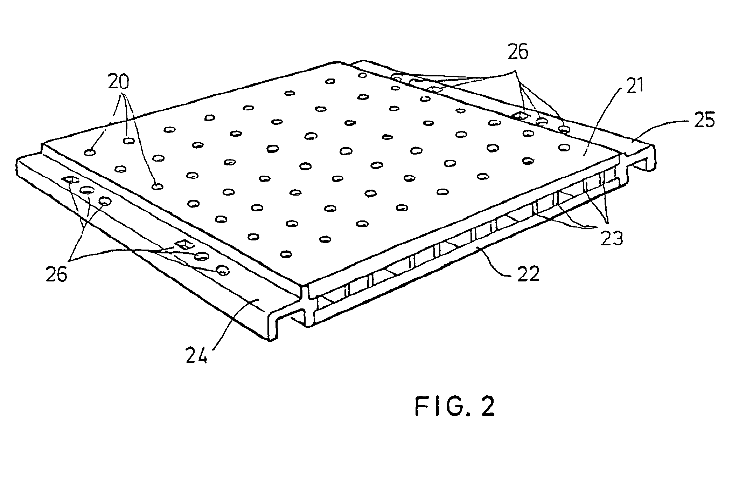

Fig. 2 shows a perspective view of a preferred embodiment of a pallet. To meet the requirement of strength in construction and to get a very plain upper surface and at the same time keeping the weight very low the pallet is made in sandwich form.

The pallet contains an upper plate 21 preferably an aluminium or steel plate with a well defined pattern of holes 20 therein and a lower plate 22 with corresponding holes (not shown). The two plates are joined together in a spaced relationship by means of square pipes 23 glued to respective plate 21 and 22. The pallet is provided with extruded sections 24 and 25 which are partly inserted between the plates 21 and 22 and fastened to them by means of gluing. The extruded sections are provided with means 26 for cooperation with docking and fixing means in accordance with the subject invention.

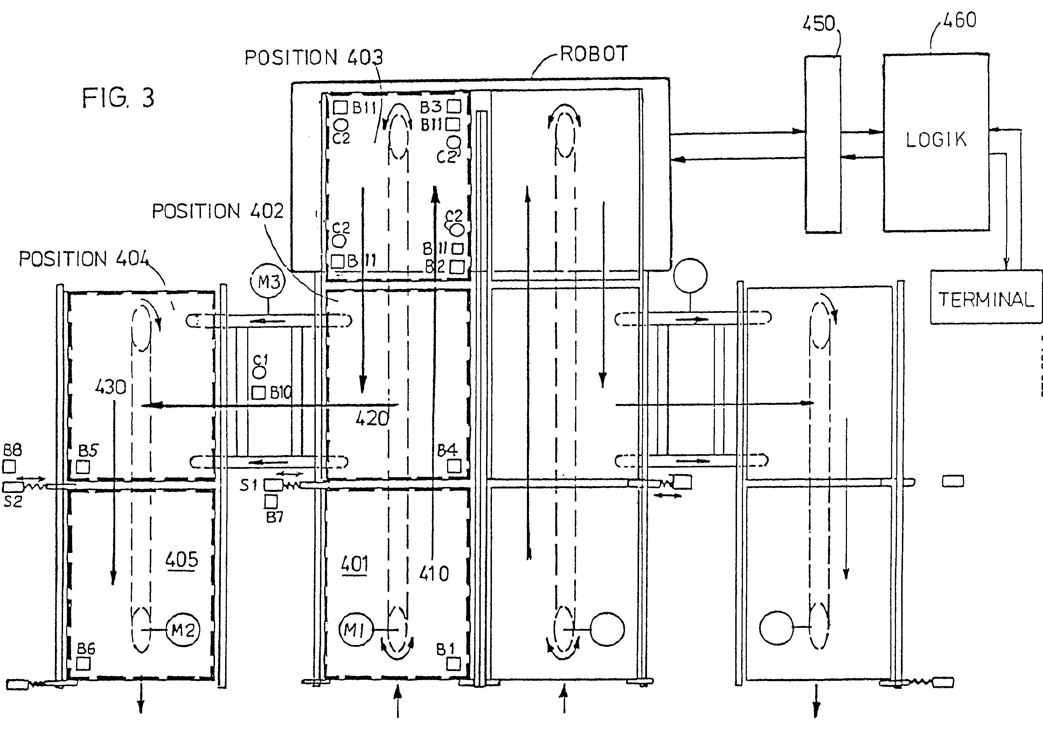

Fig. 3 is a schematic view of a transport system for exchange of pallets in a robot system. The robot is of the type described above in connection with Fig. 1. The transport system is described in detail in the above mentioned copending Swedish patent application 8301667.5 to which reference is made. The transport system is divided into two parts which are mirror images of each other.

Each part of the conveyor system consists of three transport paths. A first one is indicated by arrow 410 and is used for transport of a pallet from a preload position 401 to a work position 403 within the robot envelope and then back to an intermediate position 402. A second transport path is indicated by arrow 420 and is used for transport of the pallet from said intermediate position 402 in transport path 410 to a first position 404 of a third transport 430. The third transport path 430 is used to transport the pallet from said first position 404 to an output position 405 for the pallet.

The transport paths are provided with sensing means B1, B2, B3, B4, B5 and B6 for sensing and signalling the position of a pallet to an operation-controlling logic device 460. Stop means S1, S2 and S3 with associated sensing means B7, B8 resp. B9 are also arranged along the transport paths 410 and 430. Docking means indicated by C2 and actuable by hydraulic means (not shown) upon a signal from the control unit 460 are arranged to cooperate with a pallet positioned in the work position 403. The position of the docking means C2 is sensed by sensing means B11.

The conveyor system operates automatically under program control. The conveyor system is via an interface 450 coupled to said operation-controlling logic device 460, which is also used for controlling the operation of the robot.

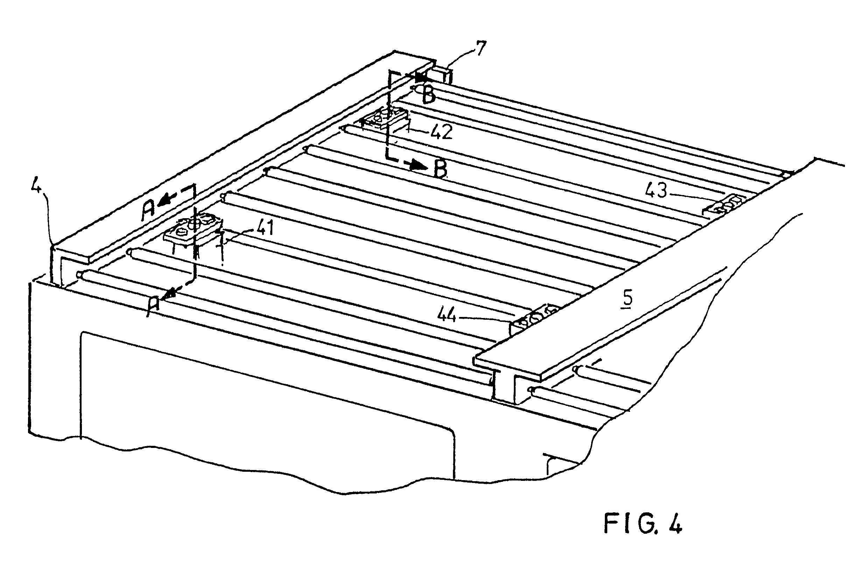

Fig. 4 is a perspective view showing the positions of docking and fixing means 41 to 44 below the work table (pallet) area of the robot. The pallet is transported into an approximate work position defined by the guide rails 4 and 5 and stop means 7 by means of a roll conveyor.

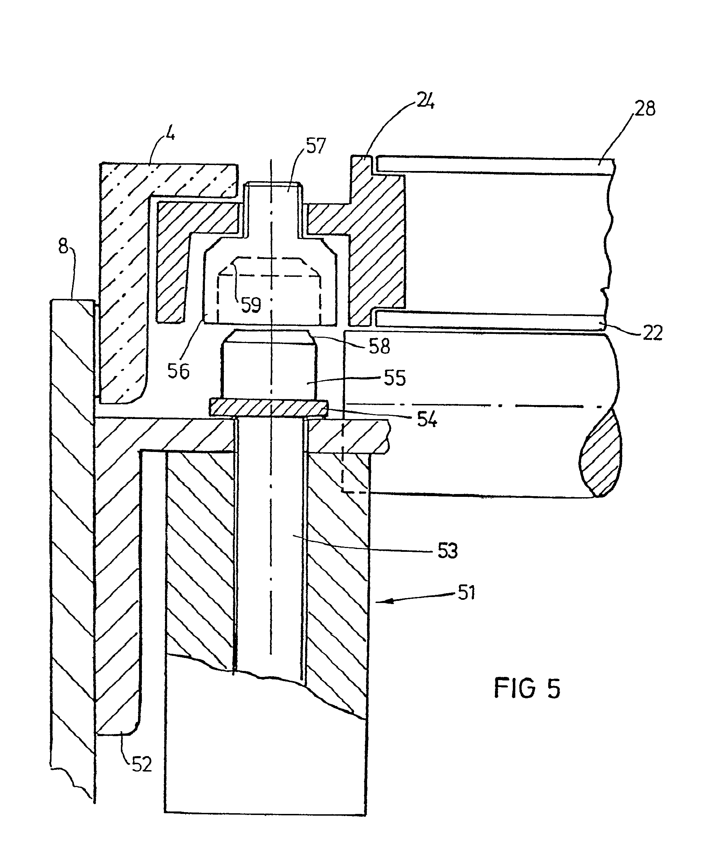

Fig. 5 is a sectional view along line A-A of Fig. 4. A linear motor for example a hydraulic or pneumatic motor 51 is fixedly mounted to the robot frame 8 by means of an angle bar 52. The movable part 53 of the motor is provided with an elongated bar 54 and a cylinder formed stud 55 for cooperation with a socket 56, which is an integral part of a stud bolt 57. The stud bolt 57 is adjustably fastened to the extruded section 24 of a pallet which has been brought into the approximate work position. The stud 55 has an upper chamfered section 58. The inner diameter of the socket 56 ist slightly greater than the diameter of the stud 55. The socket 56 is provided with an inner tapered section 59 for cooperation with said chamfered section 58 of the stud 55.

When the linear motor 51 is activated it moves bar 54 and the stud 55 upwards. During said upward movement the chamfered section 58 of the stud 55 will contact the lower inner edge of the socket 56 and cause a lateral movement of the pallet so that the stud 55 can move into the socket. At the further movement of the linear motor 51 the chamfered section 58 of the stud 55 will contact the tapered section 59 of the socket 56 with the result that the stud and the socket will be laterally exact positioned to each other. That means the pallet will be exactly positioned in the x and y coordinate directions.

Finally, at the further movement of the linear motor 51 the stud will lift the pallet and press its extruded section 24 against the guide rail 4, which is fixedly mounted to the robot frame 8 in an exactly defined z coordinate position thereby exactly defining the position of the top surface of the pallet in the z coordinate direction.

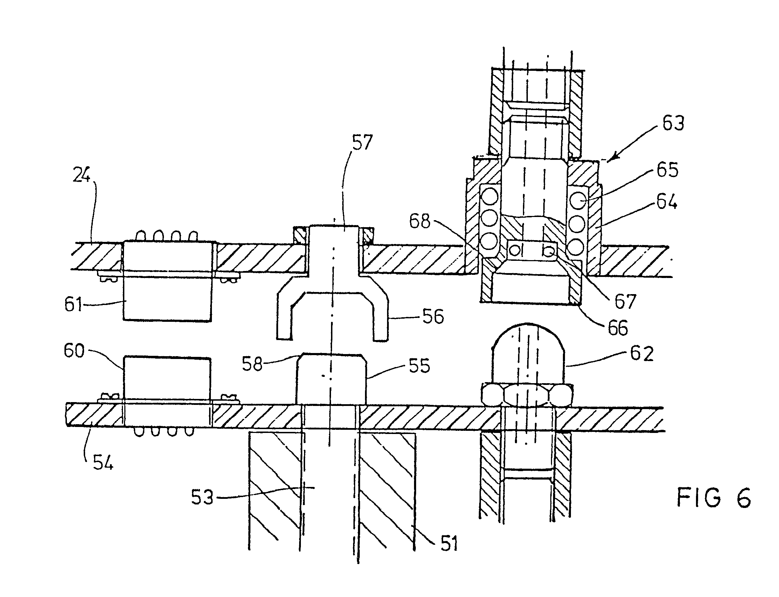

Fig. 6 is a sectional view along line B-B of Fig. 4. Fig. 6 shows a sectional view of the docking and fixing means. The docking means 60 and 62 are fixedly mounted to the elongated bar 54 which as mentioned above is fixedly mounted to the movable part 53 of the linear motor 51. The extruded section 24 of the pallet is provided with corresponding docking means 61 respective 64. The docking means may for example consist of an electric connector 60-61 or hydraulic or pneumatic connector 62-64 for supplying electrical power and/or electrical control signals respective oil or air pressure or vacuum to the devices on the pallet. When, as described above, the linear motor 51 is activated it moves the elongated bar 54, which is provided with the docking means 60 and 62, upwards. During said upwards movement the chamfered section 58 of the stud 55 will contact the lower inner edge of the socket 56 and cause a lateral movement of the pallet so that the stud 55 can move into the socket. This has also the effect that the docking means, the two parts 60 and 61 of the electric connector and the two parts 62 and 64 of the air or oil pressure or vacuum connector, become aligned with each other. Thus, at the further movement of the bar 54 the two parts 60 and 61 respective 62 and 64 will be coupled together. One part 64 of the connector 62-63 is resiliently journalled in a housing 63 by means of a coil spring 65. Thus when the lower part 62 of the connector, which is spherically formed is moved upwards it passes into the socket 66 and contacts the bushing 67 and the tapered section 68. At the further movement of the lower part 62 it presses the upper part 64 upwards against the force of the spring 65. Thus, an absolutely tight coupling is guaranteed.

While a preferred embodiment has been shown and described, it will be understood that there is no intent to limit the invention by such disclosure but, rather, it is intended to cover all modification in alternate construction falling within the scope of the invention as defined in the attached claims.

## Claims

1. A docking and fixing system for a robot or like system for docking and fixing a pallet which has been moved into an approximate work position, characterized by a linear motor (51) fixedly mounted to a robot frame (8) in a position transverse to the transport path of the pallet and having an elongated bar (54) fastened transversely to its axially movable part (53), a stud (55) and docking means (60 and 62) fixedly mounted to said bar (54),

a socket (56) for cooperation with said stud (55) when said stud is moved upwards by said linear motor (51), in order to position the pallet in a lateral, exactly defined position, said socket (56) being an integral part of a stud bolt (57) which is adjustably mounted to an extruded section (24) of the pallet, and

a guide rail (4) fixedly mounted to the robot frame (8) for cooperation with said extruded section (24) of the pallet, when the pallet is moved upwards by said linear motor (51), in order to position the pallet in a vertical, exactly defined position.

2. The system according to claim 1, characterized in that said stud (55) is cylindrically formed and in that said socket (56) has an inner diameter which is slightly greater than the diameter of said stud (55).

3. The system according to claim 1 or 2, characterized in that said stud (55) is provided with a chamfered section (58) for cooperation with a tapered section (59) of said socket (56).

4. The system according to claim 1, 2 or 3, characterized in that said stud bolt (57) is laterally and vertically adjustable.

5. The system according to any of the claims 1 to 4, characterized in that said docking means includes a first part (60) of an electric connector for cooperation with a second part (61) of said electric connector, said second part being fixedly mounted to the pallet.

6. The system according to any of the claims 1 to 5, characterized in that said docking means includes a first part (62) of a hydraulic or pneumatic coupling for cooperation with a second part (64) of said coupling, said second part (64) being resiliently mounted to the pallet.

7. The system according to claim 6, characterized in that said second part (64) is resiliently journalled in a housing (63) by means of a coil spring (65).

8. The system according to claim 6 or 7, characterized in that said second part (64) is provided with a tapered section (68) and bushing (67).


## Patentansprüche

1. Andock- und Feststellvorrichtung für einen Roboter – oder ähnliches System zum Andocken und Fixieren einer Palette, welche in eine angenäherte Arbeitsstellung bewegt worden ist, gekennzeichnet durch

einen Linearmotor (51), der fest an einem Roboterrahmen (8) in einer Lage quer zum Transportweg der Palette montiert ist und einen verlängerten Querträger (54) aufweist, der quer zu dem axial verschiebbaren Teil (53) befestigt ist, einen Führungsstift (55) und Andockmittel (60 und 62), die dem Anschlag (54) fest zugeordnet sind, weiter gekennzeichnet

durch eine Hülse (56) zum Zusammenwirken mit besagten Stift (55), wenn der Stift aufwärts durch den Linearmotor (51) bewegt wird, um die Palette in eine seitlich, genau definierte Lage zu positionieren, wobei die Hülse (56) Teil eines Stiftbolzens (57) ist, welcher einstellbar an einem gegossenen Abschnitt (24) der Palette montiert ist und ferner gekennzeichnet

durch eine Führungsschiene (4), welche starr an dem Roboterrahmen (8) zum Zusammenwirken mit dem genannten extrodierten Abschnitt (24) der Palette befestigt ist, um die Palette in einer vertikalen genau definierten Lage zu positionieren, wenn diese durch den Linearmotor (51) aufwärts bewegt wird.

2. System nach Anspruch 1, dadurch gekennzeichnet, dass der Führungsstift (55) zylindrisch geformt ist und dass die Hülse (56) einen inneren Durchmesser hat, welcher geringfügig grösser ist als der Durchmesser des Führungsstiftes (55).

3. System nach Anspruch 1 oder 2, dadurch gekennzeichnet, dass der Führungsstift (55) einem abgeschrägten Abschnitt (58) zum Zusammenwirken mit einem sich verjüngenden Abschnitt (59) der Aufnahme (56), aufweist.

4. System nach Anspruch 1, 2 oder 3, dadurch gekennzeichnet, dass der Stiftbolzen (57) waagrecht und senkrecht justierbar gehalten ist.

5. System nach einem der Ansprüche 1 bis 4, dadurch gekennzeichnet, dass die Führungsglieder ein erstes Teil (60) einer elektrischen Verbindung zum Zusammenwirken mit einem zweiten Teil (61) der elektrischen Verbindung umfassen, wobei das zweite Teil starr an der Palette befestigt ist.

6. System nach einem der Ansprüche 1 bis 5, dadurch gekennzeichnet, dass die Führungsmittel ein erstes Teil (62) einer hydraulischen oder pneumatischen Kupplung umfassen zum Zusammenwirken mit einem zweiten Teil (64) dieser Kupplung, wobei das zweite Teil (64) federnd in der Palette gehalten ist.

7. Systeme nach einem der Ansprüche 1 bis 5, dadurch gekennzeichnet, dass die Führungsmittel ein erstes Teil (62) einer hydraulischen oder pneumatischen Kupplung umfassen zum Zusammenwirken mit einem zweiten Teil (64) dieser Kupplung, wobei das zweite Teil (64) federnd in der Palette gehalten ist.

7. System nach Anspruch 6, dadurch gekennzeichnet, dass das zweite Teil (64) federnd in einem Gehäuse (63) mit Hilfe einer Schraubenfeder gehalten ist.

8. System nach Anspruch 6 oder 7, dadurch gekennzeichnet, dass der zweite Teil (64) versehen ist mit einem abgeschrägten Abschnitt (68) und einem Lagerring (67).


## Revendications

1. Moyen d'accouplement et de fixation pour un robot ou système analogue pour accoupler et fixer une palette qui a été déplacée vers une position de travail approchée, caractérisée par:

un moteur linéaire (51) monté de façon fixe sur un bâti de robot (8) dans une position transverse au trajet de déplacement de la palette et comprenant une barre allongée (54) fixée transversalement à sa partie mobile axialement (53), un goujon (55) et des moyens d'accouplement (60 et 62) montés de façon fixe sur ladite barre (54),

un socle (56) pour coopérer avec le goujon (55) quand ce goujon est déplacé vers le haut par le moteur linéaire (51), pour positionner la palette dans une position latérale définie avec précision, le socle (56) faisant partie d'un boulon fileté (57) qui est monté de façon réglable sur une partie extrudée (24) de la palette,

un rail de guidage (4) monté de façon fixe sur le bâti (8) du robot pour coopérer avec la partie extrudée (24) de la palette, quand la palette est déplacée vers le haut par le moteur linéaire (51), pour positionner la palette dans une position verticale définie avec précision.

2. Dispositif selon la revendication 1, caractérisé en ce que le goujon (55) est conformé de façon cylindrique et en ce que le socle (56) a un diamètre interne qui est légèrement supérieur au diamètre du goujon (55).

3. Dispositif selon l'une des revendications 1 ou 2, caractérisé en ce que le goujon (55) est muni d'une partie chanfreinée (58) pour coopérer avec une partie conique (59) du socle (56).

4. Dispositif selon l'une des revendications 1, 2 ou 3, caractérisé en ce que le boulon fileté (57) est réglable latéralement et verticalement.

5. Dispositif selon l'une quelconque des revendications 1 à 4, caractérisé en ce que le moyen d'accouplement comprend une première partie (60) d'un connecteur électrique pour coopérer avec une seconde partie (61) du connecteur électrique, la seconde partie étant montée de façon fixe sur la palette.

6. Dispositif selon l'une quelconque des revendications 1 à 5, caractérisé en ce que le moyen d'accouplement comprend une première partie (62) d'un couplage hydraulique ou pneumatique pour coopérer avec une seconde partie (64) du couplage, la seconde partie (64) étant montée élastiquement sur la palette.

7. Dispositif selon la revendication 6, caractérisé en ce que la seconde partie (64) est logée élastiquement dans un logement (63) au moyen d'un ressort hélicoïdal (65).

8. Dispositif selon l'une des revendications 6 ou 7, caractérisé en ce que la seconde partie (64) est munie d'une partie conique (68) et d'une douille (67).

FIG. 1

FIG. 2

FIG. 3

FIG. 4

FIG 5

FIG 6